# EUROPEAN PATENT APPLICATION

(11) **EP 3 962 175 A1**
(43) Date of publication of application: **02.03.2022**
(21) Application number: 19927383.0
(22) Date of filing: 30.04.2019
(51) Int. Cl.: H04W 36/30

(54) **CELL RECONFIGURATION METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: dompatent von Kreisler Selting Werner - Partnerschaft von Patent- und Rechtsanwälten mbB
(86) International application number: PCT/CN2019/085178
(87) International publication number: WO 2020/220258

(57) **Abstract**

Methods and apparatuses for reconfiguring a cell are provided. One of the methods is applied to a terminal and comprises: determine a handover target cell configured by a base station for the terminal is a first neighbor cell; determine a cell reconfiguration condition, wherein the cell reconfiguration condition is a specified condition for triggering the terminal to request the base station to reconfigure the handover target cell; and in response to detecting that the cell reconfiguration condition is met, sending a specified measurement result for reconfiguring the handover target cell to the base station, so that the base station reconfigures the handover target cell based on the specified measurement result. In this way, in the present disclosure, it is ensured that the terminal can eventually perform a handover to the best neighbor cell, frequent handovers or a handover failure due to the terminal performing a handover to a cell with a weaker signal can be avoided and efficiency of cell handover is improved.

## Description

### TECHNICAL FIELD

The present disclosure relates to the field of communication technology, and in particular to methods and apparatuses for reconfiguring a cell.

### BACKGROUND

In a handover of a 4th Generation mobile communication technology (4G for short), the network can send a handover request to a handover target cell based on a measurement report result of user equipment (UE for short). When a confirmation of the handover target cell is completed, the network may send a handover command carrying configuration information of the handover target cell to the UE. After receiving the handover command, the UE may initiate a random access to the handover target cell.

In order to improve robustness of the handover, a conditional handover (CHO for short) is proposed in a fifth generation mobile communication technology (5G for short), that is, the network can configure the handover target cell and a handover trigger condition for the UE in advance. When the handover trigger condition is met, the UE can initiate the handover by itself without the need for the network to sending the handover command.

However, in the CHO, if a signal strength relationship of a neighbor cell changes, the UE may not update the measurement report result, and the network may not change the handover target cell. This may cause the UE to perform a handover to a cell with a weaker signal, which in turn leads to frequent handovers or a handover failure.

### SUMMARY

In order to overcome the problems in the related art, the embodiments of the present disclosure provide methods and apparatuses for reconfiguring a cell.

According to a first aspect of the embodiments of the present disclosure, there is provided a method for reconfiguring a cell, being applied to a terminal and including:
determining that a handover target cell configured by a base station for the terminal is a first neighbor cell;
determining a cell reconfiguration condition, wherein the cell reconfiguration condition is a specified condition for triggering the terminal to request the base station to reconfigure the handover target cell; and
in response to detecting that the cell reconfiguration condition is met, sending a specified measurement result for reconfiguring the handover target cell to the base station, so that the base station reconfigures the handover target cell based on the specified measurement result.

In some examples, the cell reconfiguration condition includes a first measurement report condition, and the first measurement report condition is that a neighbor cell after offset is better than the first neighbor cell.

In some examples, the first measurement report condition is a measurement report condition configured by the base station for the terminal;
the method further includes:
receiving first configuration information for indicating the first measurement report condition from the base station, wherein the first configuration information includes at least one of an identifier of the first neighbor cell or a frequency of the first neighbor cell; and
determining the first measurement report condition based on the first configuration information.

In some examples, the first configuration information further includes a specified offset value configured by the base station for the terminal.

In some examples, in response to detecting that the cell reconfiguration condition is met, sending the specified measurement result for reconfiguring the handover target cell to the base station, includes:
detecting that one or more second neighbor cells meet the cell reconfiguration condition;
generating measurement report information, wherein the measurement report information includes respective identifiers of the one or more second neighbor cells and respective first measurement results corresponding to the one or more second neighbor cells; and
sending the measurement report information to the base station, so that the base station acquires the first measurement result from the measurement report information, wherein the first measurement result is the specified measurement result.

In some examples, the cell reconfiguration condition includes a handover failure for the first neighbor cell;
in response to detecting that the cell reconfiguration condition is met, sending the specified measurement result for reconfiguring the handover target cell to the base station, includes:
detecting the handover failure for the first neighbor cell;
generating handover failure indication information, wherein the handover failure indication information includes an identifier of the first neighbor cell and second measurement results of other neighbor cells; and
sending the handover failure indication information to the base station, so that the base station acquires the second measurement results from the handover failure indication information, wherein the second measurement results are the specified measurement result.

In some examples, the method further includes:
receiving a reconfiguration message for indicating a third neighbor cell sent by the base station, wherein the third neighbor cell is the handover target cell reconfigured by the base station for the terminal; and
initiating a handover to the third neighbor cell based on the reconfiguration message.
determining that a handover target cell configured for a terminal is a first neighbor cell;
in response to that the terminal detects that a cell reconfiguration condition is met, receiving a specified measurement result for reconfiguring the handover target cell sent by the terminal, wherein the cell reconfiguration condition is a specified condition for triggering the terminal to request the base station to reconfigure the handover target cell; and
reconfiguring the handover target cell based on the specified measurement result.

In some examples, the cell reconfiguration condition includes a first measurement report condition, and the first measurement report condition is that a neighbor cell after offset is better than the first neighbor cell.

In some examples, the method further includes:
determining at least one of an identifier of the first neighbor cell or a frequency of the first neighbor cell;
adding at least one of the identifier of the first neighbor cell or the frequency of the first neighbor cell to first configuration information for indicating the first measurement report condition; and
sending the first configuration information to the terminal, so that the terminal determines the first measurement report condition based on the first configuration information.

In some examples, the first configuration information further includes a specified offset value configured by the base station for the terminal.

In some examples, in response to that the terminal detects that the cell reconfiguration condition is met, receiving the specified measurement result for reconfiguring the handover target cell sent by the terminal, includes:
in response to that the terminal detects that one or more second neighbor cells meet the cell reconfiguration condition, receiving measurement report information sent by the terminal, wherein the measurement report information includes respective identifiers of the one or more second neighbor cells and respective first measurement results corresponding to the one or more second neighbor cells; and
acquiring the first measurement result from the measurement report information, wherein the first measurement result is the specified measurement result.

In some examples, the cell reconfiguration condition includes a handover failure for the first neighbor cell;
in response to that the terminal detects that the cell reconfiguration condition is met, receiving the specified measurement result for reconfiguring the handover target cell sent by the terminal, includes:
in response to that the terminal detects the handover failure for the first neighbor cell, receiving handover failure indication information sent by the terminal, wherein the handover failure indication information includes an identifier of the first neighbor cell and second measurement results of other neighbor cells; and
acquiring the second measurement results from the handover failure indication information, wherein the second measurement results are the specified measurement result.

In some examples, reconfiguring the handover target cell based on the specified measurement result includes:
acquiring signal strength of each neighbor cell in the specified measurement result;
determining a neighbor cell with a greatest signal strength as a third neighbor cell, wherein the third neighbor cell is the handover target cell reconfigured by the base station for the terminal; and
sending a reconfiguration message for indicating the third neighbor cell to the terminal, so that the terminal initiates a handover to the third neighbor cell based on the reconfiguration message.

According to a second aspect of the embodiments of the present disclosure, there is provided a method for reconfiguring a cell, being applied to a base station and including:
determining that a handover target cell configured for a terminal is a first neighbor cell;
in response to that the terminal detects that a cell reconfiguration condition is met, receiving a specified measurement result for reconfiguring the handover target cell sent by the terminal, wherein the cell reconfiguration condition is a specified condition for triggering the terminal to request the base station to reconfigure the handover target cell; and
reconfiguring the handover target cell based on the specified measurement result.

In some examples, the cell reconfiguration condition includes a first measurement report condition, and the first measurement report condition is that a neighbor cell after offset is better than the first neighbor cell.

In some examples, the method further includes:
determining at least one of an identifier of the first neighbor cell or a frequency of the first neighbor cell;
adding at least one of the identifier of the first neighbor cell or the frequency of the first neighbor cell to first configuration information for indicating the first measurement report condition; and
sending the first configuration information to the terminal, so that the terminal determines the first measurement report condition based on the first configuration information.

In some examples, the first configuration information further includes a specified offset value configured by the base station for the terminal.

In some examples, in response to that the terminal detects that the cell reconfiguration condition is met, receiving the specified measurement result for reconfiguring the handover target cell sent by the terminal, includes:
in response to that the terminal detects that one or more second neighbor cells meet the cell reconfiguration condition, receiving measurement report information sent by the terminal, wherein the measurement report information includes respective identifiers of the one or more second neighbor cells and respective first measurement results corresponding to the one or more second neighbor cells; and
acquiring the first measurement result from the measurement report information, wherein the first measurement result is the specified measurement result.

In some examples, the cell reconfiguration condition includes a handover failure for the first neighbor cell;
in response to that the terminal detects that the cell reconfiguration condition is met, receiving the specified measurement result for reconfiguring the handover target cell sent by the terminal, includes:
in response to that the terminal detects the handover failure for the first neighbor cell, receiving handover failure indication information sent by the terminal, wherein the handover failure indication information includes an identifier of the first neighbor cell and second measurement results of other neighbor cells; and
acquiring the second measurement results from the handover failure indication information, wherein the second measurement results are the specified measurement result.

In some examples, reconfiguring the handover target cell based on the specified measurement result includes:
acquiring signal strength of each neighbor cell in the specified measurement result;
determining a neighbor cell with a greatest signal strength as a third neighbor cell, wherein the third neighbor cell is the handover target cell reconfigured by the base station for the terminal; and
sending a reconfiguration message for indicating the third neighbor cell to the terminal, so that the terminal initiates a handover to the third neighbor cell based on the reconfiguration message.

According to a third aspect of the embodiments of the present disclosure, there is provided an apparatus for reconfiguring a cell, being applied to a terminal and including:
a first determination module, configured to determine that a handover target cell configured by a base station for the terminal is a first neighbor cell;
a second determination module, configured to determine a cell reconfiguration condition, wherein the cell reconfiguration condition is a specified condition for triggering the terminal to request the base station to reconfigure the handover target cell; and
a sending module, configured to, in response to detecting that the cell reconfiguration condition is met, send a specified measurement result for reconfiguring the handover target cell to the base station, so that the base station reconfigures the handover target cell based on the specified measurement result.

In some examples, the cell reconfiguration condition includes a first measurement report condition, and the first measurement report condition is that a neighbor cell after offset is better than the first neighbor cell.

In some examples, the first measurement report condition is a measurement report condition configured by the base station for the terminal;
the apparatus further includes:
a first reception module, configured to receive first configuration information for indicating the first measurement report condition from the base station, wherein the first configuration information includes at least one of an identifier of the first neighbor cell or a frequency of the first neighbor cell; and
a third determination module, configured to determine the first measurement report condition based on the first configuration information.

In some examples, the first configuration information further includes a specified offset value configured by the base station for the terminal.

In some examples, the sending module includes:
a first detection sub-module, configured to detect that one or more second neighbor cells meet the cell reconfiguration condition;
a first generation sub-module, configured to generate measurement report information, wherein the measurement report information includes respective identifiers of the one or more second neighbor cells and respective first measurement results corresponding to the one or more second neighbor cells; and
a first sending sub-module, configured to send the measurement report information to the base station, so that the base station acquires the first measurement result from the measurement report information, wherein the first measurement result is the specified measurement result.

In some examples, the cell reconfiguration condition includes a handover failure for the first neighbor cell;
the sending module includes:
a second detection sub-module, configured to detect the handover failure for the first neighbor cell;
a second generation sub-module, configured to generate handover failure indication information, wherein the handover failure indication information includes an identifier of the first neighbor cell and second measurement results of other neighbor cells; and
a second sending sub-module, configured to send the handover failure indication information to the base station, so that the base station acquires the second measurement results from the handover failure indication information, wherein the second measurement results are the specified measurement result.

In some examples, the apparatus further includes:
a second reception module, configured to receive a reconfiguration message for indicating a third neighbor cell sent by the base station, wherein the third neighbor cell is the handover target cell reconfigured by the base station for the terminal; and
a handover module, configured to initiate a handover to the third neighbor cell based on the reconfiguration message.

According to a fourth aspect of the embodiments of the present disclosure, there is provided an apparatus for reconfiguring a cell, being applied to a base station and including:
a target cell determination module, configured to determine that a handover target cell configured for a terminal is a first neighbor cell;
a measurement result reception module, configured to, in response to that the terminal detects that a cell reconfiguration condition is met, receive a specified measurement result for reconfiguring the handover target cell sent by the terminal, wherein the cell reconfiguration condition is a specified condition for triggering the terminal to request the base station to reconfigure the handover target cell; and
a target cell reconfiguration module, configured to reconfigure the handover target cell based on the specified measurement result.
In some examples, the cell reconfiguration condition includes a first measurement report condition, and the first measurement report condition is that a neighbor cell after offset is better than the first neighbor cell.

In some examples, the apparatus further includes:
an identifier determination module, configured to determine at least one of an identifier of the first neighbor cell or a frequency of the first neighbor cell;
an identifier addition module, configured to add at least one of the identifier of the first neighbor cell or the frequency of the first neighbor cell to first configuration information for indicating the first measurement report condition; and
an information sending module, configured to send the first configuration information to the terminal, so that the terminal determines the first measurement report condition based on the first configuration information.

In some examples, the first configuration information further includes a specified offset value configured by the base station for the terminal.

In some examples, the measurement result reception module includes:
a first information reception sub-module, configured to, in response to that the terminal detects that one or more second neighbor cells meet the cell reconfiguration condition, receive measurement report information sent by the terminal, wherein the measurement report information includes respective identifiers of the one or more second neighbor cells and respective first measurement results corresponding to the one or more second neighbor cells; and
a first acquisition sub-module, configured to acquire the first measurement result from the measurement report information, wherein the first measurement result is the specified measurement result.

In some examples, the cell reconfiguration condition includes a handover failure for the first neighbor cell;
the measurement result reception module includes:
a second information reception sub-module, configured to, in response to that the terminal detects the handover failure for the first neighbor cell, receive handover failure indication information sent by the terminal, wherein the handover failure indication information includes an identifier of the first neighbor cell and second measurement results of other neighbor cells; and
a second acquisition sub-module, configured to acquire the second measurement results from the handover failure indication information, wherein the second measurement results are the specified measurement result.

In some examples, the target cell reconfiguration module includes:
a third acquisition sub-module, configured to acquire signal strength of each neighbor cell in the specified measurement result;
a target cell determination sub-module, configured to determine a neighbor cell with a greatest signal strength as a third neighbor cell, wherein the third neighbor cell is the handover target cell reconfigured by the base station for the terminal; and
a reconfiguration message sending sub-module, configured to send a reconfiguration message for indicating the third neighbor cell to the terminal, so that the terminal initiates a handover to the third neighbor cell based on the reconfiguration message.

According to a fifth aspect of the embodiments of the present disclosure, there is provided a non-transitory computer readable storage medium with computer instructions stored thereon, wherein the computer instructions are used to perform the method for reconfiguring a cell provided in the above first aspect.

According to a sixth aspect of the embodiments of the present disclosure, there is provided a non-transitory computer readable storage medium with computer instructions stored thereon, wherein the computer instructions are used to perform the method for reconfiguring a cell provided in the above first aspect.

According to a seventh aspect of the embodiments of the present disclosure, there is provided an apparatus for reconfiguring a cell applied to a terminal, including:
a processor; and
a memory for storing instructions executable by the processor,
wherein the processor is configured to:
   determine that a handover target cell configured by a base station for the terminal is a first neighbor cell;
   determine a cell reconfiguration condition, wherein the cell reconfiguration condition is a specified condition for triggering the terminal to request the base station to reconfigure the handover target cell; and
   in response to detecting that the cell reconfiguration condition is met, send a specified measurement result for reconfiguring the handover target cell to the base station, so that the base station reconfigures the handover target cell based on the specified measurement result.

According to a eighth aspect of the embodiments of the present disclosure, there is provided an apparatus for reconfiguring a cell applied to a base station, including:
a processor; and
a memory for storing instructions executable by the processor,
wherein the processor is configured to:
   determine that a handover target cell configured for a terminal is a first neighbor cell;
   in response to that the terminal detects that a cell reconfiguration condition is met, receive a specified measurement result for reconfiguring the handover target cell sent by the terminal, wherein the cell reconfiguration condition is a specified condition for triggering the terminal to request the base station to reconfigure the handover target cell; and
   reconfigure the handover target cell based on the specified measurement result.

The technical solutions provided by the embodiments of the present disclosure may include the following beneficial effects.

In the present disclosure, after it is determined that the handover target cell configured by the base station for the terminal is the first neighbor cell, the cell reconfiguration condition can be determined, and when it is detected that the cell reconfiguration condition is met, it indicates that the first neighbor cell configured by the base station for the terminal is not a best handover target cell. In this case, the specified measurement result for reconfiguring the handover target cell may be sent to the base station, thus the base station can reconfigure the handover target cell based on the specified measurement result. In this way, it is ensured that the terminal can eventually perform a handover to the best neighbor cell, frequent handovers or a handover failure due to the terminal performing a handover to a cell with a weaker signal can be avoided and efficiency of cell handover is improved.

In the present disclosure, when it is determined that the handover target cell configured for the terminal is the first neighbor cell, if the specified measurement result for reconfiguring the handover target cell sent by the terminal is received, the handover target cell can be reconfigured based on the specified measurement result. In this way, it is ensured that the terminal can eventually perform a handover to a best neighbor cell, frequent handovers or a handover failure due to the terminal performing a handover to a cell with a weaker signal can be avoided and the efficiency of cell handover is improved.

It should be understood that the above general description and the following detailed description are only exemplary and explanatory, and cannot limit the present disclosure.

### BRIEF DESCRIPTION OF THE DRAWINGS

The accompanying drawings, which are incorporated in and constitute a part of the present description, illustrate embodiments consistent with the present disclosure and serve to explain the principles of the present disclosure together with the description.
FIG. 1 is a flowchart illustrating a method for reconfiguring a cell according to an exemplary embodiment;
FIG. 2 is an application scenario diagram illustrating a method for reconfiguring a cell according to an exemplary embodiment;
FIG. 3 is a flowchart illustrating another method for reconfiguring a cell according to an exemplary embodiment;
FIG. 4 is a flowchart illustrating another method for reconfiguring a cell according to an exemplary embodiment;
FIG. 5 is a flowchart illustrating another method for reconfiguring a cell according to an exemplary embodiment;
FIG. 6 is a flowchart illustrating a method for reconfiguring a cell according to an exemplary embodiment;
FIG. 7 is a flowchart illustrating another method for reconfiguring a cell according to an exemplary embodiment;
FIG. 8 is a flowchart illustrating another method for reconfiguring a cell according to an exemplary embodiment;
FIG. 9 is a flowchart illustrating another method for reconfiguring a cell according to an exemplary embodiment;
FIG. 10 is a block diagram illustrating an apparatus for reconfiguring a cell according to an exemplary embodiment;
FIG. 11 is a block diagram illustrating another apparatus for reconfiguring a cell according to an exemplary embodiment;
FIG. 12 is a block diagram illustrating another apparatus for reconfiguring a cell according to an exemplary embodiment;
FIG. 13 is a block diagram illustrating another apparatus for reconfiguring a cell according to an exemplary embodiment;
FIG. 14 is a block diagram illustrating another apparatus for reconfiguring a cell according to an exemplary embodiment;
FIG. 15 is a block diagram illustrating an apparatus for reconfiguring a cell according to an exemplary embodiment;
FIG. 16 is a block diagram illustrating another apparatus for reconfiguring a cell according to an exemplary embodiment;
FIG. 17 is a block diagram illustrating another apparatus for reconfiguring a cell according to an exemplary embodiment;
FIG. 18 is a block diagram illustrating another apparatus for reconfiguring a cell according to an exemplary embodiment;
FIG. 19 is a block diagram illustrating another apparatus for reconfiguring a cell according to an exemplary embodiment;
FIG. 20 is a schematic structural diagram illustrating an apparatus for reconfiguring a cell according to an exemplary embodiment;
FIG. 21 is a schematic structural diagram illustrating an apparatus for reconfiguring a cell according to an exemplary embodiment.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The implements described in the following exemplary embodiment do not represent all implements consistent with the present disclosure. Rather, they are merely examples of apparatuses and methods consistent with some aspects of the present disclosure as detailed in the appended claims.

The terms used in the present disclosure are only for the purpose of describing specific examples and are not intended to limit the present disclosure. The singular forms "a", "said" and "the" used in the present disclosure and the appended claims are also intended to include plural forms, unless the context clearly indicates other meanings. It should also be understood that the term "and/or" as used herein refers to and includes any or all possible combinations of one or more associated listed items.

It should be understood that although the terms "first", "second", "third", etc. may be used in the present disclosure to describe various information, the information should not be limited to these terms. These terms are only used to distinguish information of the same type from each other. For example, without departing from the scope of the present disclosure, the first information may also be referred to as second information, and similarly, the second information may also be referred to as first information. Depending on the context, the word "if" as used herein may be interpreted as "on the condition that" or "when" or "in response to determining".

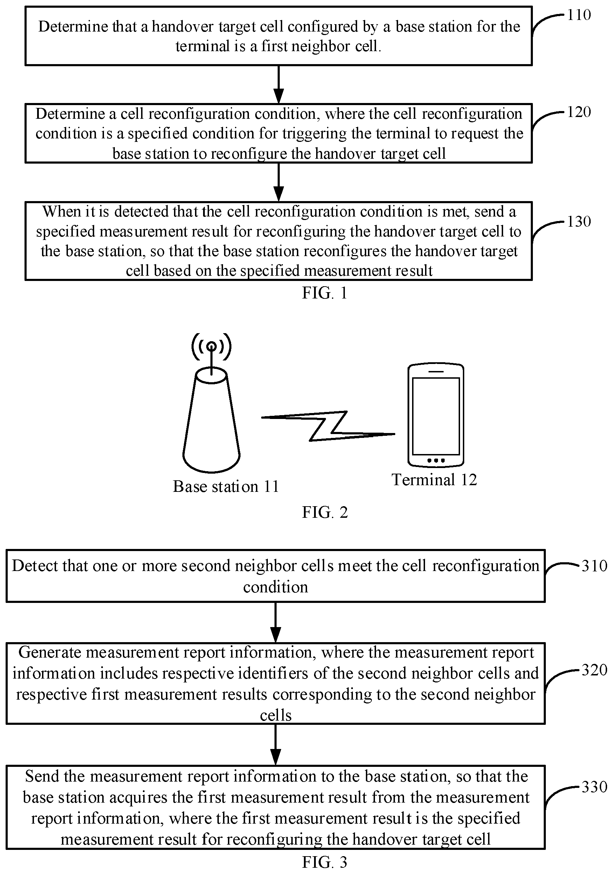

FIG. 1 is a flowchart illustrating a method for reconfiguring a cell according to an exemplary embodiment, and FIG. 2 is an application scenario diagram illustrating a method for reconfiguring a cell according to an exemplary embodiment; the method for reconfiguring a cell is applicable to a terminal, as shown in FIG. 1, the method for reconfiguring a cell may include the following steps 110 to 130.

At step 110, it is determined that a handover target cell configured by a base station for the terminal is a first neighbor cell.

In the embodiments of the present disclosure, the first neighbor cell may be a handover target cell configured by the base station for the terminal in a conditional handover (CHO for short).

At step 120, a cell reconfiguration condition is determined, where the cell reconfiguration condition is a specified condition for triggering the terminal to request the base station to reconfigure the handover target cell.

In the embodiments of the present disclosure, the cell reconfiguration condition is a specified condition set for changing the handover target cell in the CHO, in order to prevent the terminal from performing a handover to a cell with a weaker signal, which in turn may lead to frequent handovers or a handover failure.

In an embodiment, the cell reconfiguration condition in the step 120 may include a first measurement report condition, where the first measurement report condition is that a neighbor cell after offset is better than the first neighbor cell; its specific implementation can be seen in the embodiment shown in FIG. 3 in detail.

The first measurement report condition may be a measurement report condition newly defined in the present disclosure, which includes: event A7; that is, a neighbor cell after offset is better than a specific neighbor cell (or neighbor becomes offset better than neighbor X). The specific neighbor cell is the first neighbor cell in the present disclosure.

In an embodiment, the first measurement report condition may be a measurement report condition configured by the base station for the terminal and sent to the terminal through the first configuration information. The specific implementation includes:
(1-1) receiving first configuration information for indicating the first measurement report condition from the base station, where the first configuration information includes an identifier and/or a frequency of the first neighbor cell; and
(1-2) determining the first measurement report condition based on the first configuration information.

In an embodiment, the first configuration information in the (1-1) may further include a specified offset value configured by the base station for the terminal. For example, the specified offset value is 3db.

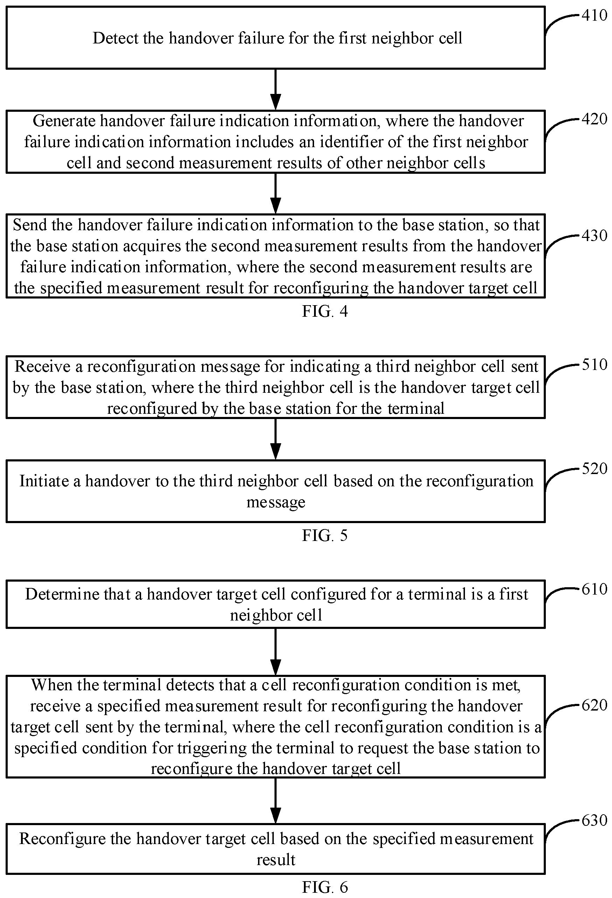

In an embodiment, the cell reconfiguration condition in the step 120 may be a handover failure for the first neighbor cell; its specific implementation can be seen in the embodiment shown in FIG. 4 in detail.

At step 130, when it is detected that the cell reconfiguration condition is met, a specified measurement result for reconfiguring the handover target cell is sent to the base station, so that the base station reconfigures the handover target cell based on the specified measurement result.

In the embodiments of the present disclosure, when the terminal detects that the cell reconfiguration condition is met, it indicates that the first neighbor cell configured by the base station for the terminal is not the best. In this case, the terminal can send the specified measurement result for reconfiguring the handover target cell to the base station. In this way, the base station can select a best neighbor cell based on the specified measurement result reported by the terminal and reconfigure the neighbor cell for the terminal.

In an example scenario, as shown in FIG. 2, a base station 11 and a terminal 12 are included. After the terminal 12 determines that the handover target cell configured by the base station for the terminal 12 is the first neighbor cell, in order to ensure a handover to the best neighbor cell, the terminal 12 may first determine a cell reconfiguration condition, where the cell reconfiguration condition is a specified condition for triggering the terminal 12 to request the base station 11 to reconfigure the handover target cell; when detecting that the cell reconfiguration condition is met, the terminal 12 can send the specified measurement result for reconfiguring the handover target cell to the base station 11, so that the base station 11 can reconfigure the handover target cell based on the specified measurement result. The handover target cell reconfigured by the base station 11 for the terminal 12 is notified to the terminal 12 through a reconfiguration message, so that the terminal 12 initiates a handover to the reconfigured handover target cell based on the reconfiguration message.

In the present disclosure, the base station 11 may be an apparatus deployed in an access network to provide wireless communication functionalities for the terminal 12. The base station 11 may include various types of macro base stations, micro base stations, relay stations, access points, and so on. In systems adopting different radio access technologies, names of devices having functionalities of a base station may be different. For example, in 5G NR systems, they are called gNodeB or gNB. As communication technology evolves, the name "base station" may change. For the convenience of description, in the embodiments of the present disclosure, apparatuses for providing wireless communication functionalities for the terminal 12 are collectively referred to as base stations.

Usually, there are a plurality of terminals 12, and one or more terminals 12 may be distributed in a cell managed by the base station 11. The terminals 12 may include various devices with wireless communication functionalities such as handheld devices, vehicle-mounted devices, wearable devices, computing devices or other processing devices connected to a wireless modem, as well as various types of User Equipment (UE for short), Mobile Station (MS for short), terminal device, etc. For ease of description, in the embodiments of the present disclosure, the above-mentioned devices are collectively referred to as terminals.

It can be seen from the above embodiment that after it is determined that the handover target cell configured by the base station for the terminal is the first neighbor cell, the cell reconfiguration condition can be determined, and when it is detected that the cell reconfiguration condition is met, it indicates that the first neighbor cell configured by the base station for the terminal is not a best handover target cell. In this case, the specified measurement result for reconfiguring the handover target cell may be sent to the base station, thus the base station can reconfigure the handover target cell based on the specified measurement result. In this way, it is ensured that the terminal can eventually perform a handover to the best neighbor cell, frequent handovers or a handover failure due to the terminal performing a handover to a cell with a weaker signal can be avoided and efficiency of cell handover is improved.

FIG. 3 is a flowchart illustrating another method for reconfiguring a cell according to an exemplary embodiment. The method for reconfiguring a cell is applicable to a terminal. On the basis of the method shown in FIG. 1, the cell reconfiguration condition includes a first measurement report condition, where the first measurement report condition is that a neighbor cell after offset is better than the first neighbor cell; in an embodiment, the first measurement report condition is a measurement report condition configured by the base station for the terminal; in an embodiment, the first configuration information further includes a specified offset value configured by the base station for the terminal; as shown in FIG. 3, the step 130, when performed, may include the following steps 310 to 330.

At step 310, it is detected that one or more second neighbor cells meet the cell reconfiguration condition.

In the embodiments of the present disclosure, the second neighbor cells represents neighbor cells that meet the first measurement report condition. If the terminal detects that one or more second neighbor cells are better than the first neighbor cell, the terminal can request the base station to reconfigure a handover target cell for it.

At step 320, measurement report information is generated, where the measurement report information includes respective identifiers of the second neighbor cells and respective first measurement results corresponding to the second neighbor cells.

In the embodiment of the present disclosure, the terminal informs the base station of respective first measurement results corresponding to the second neighbor cells, thus the base station can select a best neighbor cell from the second neighbor cells and reconfigure the neighbor cell for the terminal.

At step 330, the measurement report information is sent to the base station, so that the base station acquires the first measurement result from the measurement report information, where the first measurement result is the specified measurement result for reconfiguring the handover target cell.

The method for reconfiguring a cell shown in the steps 310 to 330 is described in the following specific examples, the base station 11 and terminal 12 shown in FIG. 2 are taken as examples for description, and the method includes:
(3-1) the terminal 12 reports the measurement result to the base station 11 that signal strength of neighbor cell 1 is -98db; signal strength of neighbor cell 2 is -110db.
(3-2) the handover target cell configured by the base station 11 for the terminal 12 is neighbor cell 1, where the neighbor cell 1 is the first neighbor cell configured by the base station for the terminal in the present disclosure.

In the embodiments of the present disclosure, since the signal strength of the neighbor cell 1 is greater than the signal strength of the neighbor cell 2, the base station may configure the neighbor cell 1 as the handover target cell.

(3-3) the measurement report condition configured by the base station 11 for the terminal 12 is A7, and the specified offset value of the neighbor cell 1 is 3db.

(3-4) if the terminal 12 measures the signal strength of the neighbor cell 1 being -97db and the signal strength of the neighbor cell 2 being -94db, a measurement report is triggered. The neighbor cell 2 is a second neighbor cell that meets the first measurement report condition in the present disclosure.

In the embodiments of the present disclosure, since the signal strength of the neighbor cell 1 becomes weaker, and the signal strength of the neighbor cell 2 becomes stronger, and the signal strength of both meets the specified offset value of 3db, the measurement report may be triggered in order to ensure that the terminal can perform a handover to a best neighbor cell. In this way, the base station can reconfigure the handover target cell for the terminal.

(3-5) after receiving the measurement result reported by the terminal 12, the base station 11 sends a reconfiguration message to the terminal 12 to indicate that the reconfigured handover target cell is the neighbor cell 2. The neighbor cell 2 is a third neighbor cell reconfigured by the base station for the terminal in the present disclosure.

It can be seen from the above embodiment that when the cell reconfiguration condition includes the first measurement report condition, if it is detected that one or more second neighbor cells meet the cell reconfiguration condition, it indicates that the signal strength of the second neighbor cells is already greater than the signal strength of the first measurement report condition, that is, it indicate that the first neighbor cell configured by the base station for the terminal is not the best handover target cell, thus the base station is to reconfigure a handover target cell for the terminal from the second neighbor cells. In this case, the terminal can trigger the measurement report, that is, the terminal can generate measurement report information. The measurement report information includes respective identifiers of the second neighbor cells and respective first measurement results corresponding to the second neighbor cells. The measurement report information is sent to the base station, so that the base station can acquire the first measurement result from the measurement report information, and the handover target cell is reconfigured based on the first measurement result. In this way, frequent handovers due to the possibility of the terminal performing a handover to a cell with a weaker signal is avoided and the efficiency of cell handover is improved.

FIG. 4 is a flowchart illustrating another method for reconfiguring a cell according to an exemplary embodiment. The method for reconfiguring a cell is applicable to a terminal. On the basis of the method shown in FIG. 1, the cell reconfiguration condition includes a handover failure for the first neighbor cell; as shown in FIG. 4, the step 130, when performed, may include the following steps 410 to 430.

At step 410, the handover failure for the first neighbor cell is detected.

In the embodiments of the present disclosure, if the terminal initiates a handover to the first neighbor cell and the handover fails, the terminal may request the base station to reconfigure a handover target cell for it.

At step 420, handover failure indication information is generated, where the handover failure indication information includes an identifier of the first neighbor cell and second measurement results of other neighbor cells.

In the embodiments of the present disclosure, the terminal informs the base station of the second measurement results of the other neighbor cells, thus the base station can select a best neighbor cell from the other neighbor cells and reconfigure the neighbor cell for the terminal.

At step 430, the handover failure indication information is sent to the base station, so that the base station acquires the second measurement results from the handover failure indication information, where the second measurement results are the specified measurement result for reconfiguring the handover target cell.

The method for reconfiguring a cell shown in the steps 410 to 430 is described in the following specific examples, the base station 11 and terminal 12 shown in FIG. 2 are taken as examples for description, and the method includes:
(4-1) the terminal 12 reports the measurement result to the base station 11 that signal strength of neighbor cell 1 is -98db; signal strength of neighbor cell 2 is -1 10db.
(4-2) the handover target cell configured by the base station 11 for the terminal 12 is neighbor cell 1, where the neighbor cell 1 is a first neighbor cell configured by the base station for the terminal in the present disclosure.

In the embodiments of the present disclosure, since the signal strength of the neighbor cell 1 is greater than the signal strength of the neighbor cell 2, the base station may configure the neighbor cell 1 as the handover target cell.

(4-3) the terminal 12 fails to initiate a handover to the neighbor cell 1 and sends a handover failure indication to the base station 11, which carries an identifier of the target cell to which the handover fails, that is, the neighbor cell 1, and carries a latest measurement result, that is, the signal strength of the neighbor cell 2 is -94db.

(4-4) after receiving the measurement result reported by the terminal 12, the base station 11 sends a reconfiguration message to the terminal 12 to indicate that the reconfigured handover target cell is the neighbor cell 2.

It can be seen from the above embodiment that when the cell reconfiguration condition includes the handover failure for the first neighbor cell, if the handover failure for the first neighbor cell is detected, the terminal can request the base station to reconfigure a handover target cell for it, that is, handover failure indication information is generated. The handover failure indication information includes an identifier of the first neighbor cell and second measurement results of other neighbor cells. The handover failure indication information is sent to the base station, so that the base station acquires the second measurement results from the handover failure indication information and reconfigures the handover target cell based on the second measurement results. In this way, when the handover fails, the terminal can initiate a handover to another handover target cell as soon as possible, and a time used for a cell handover is shortened, and realization of cell reconfiguration is enriched, thus improving reliability of cell reconfiguration.

FIG. 5 is a flowchart illustrating another method for reconfiguring a cell according to an exemplary embodiment. The method for reconfiguring a cell is applicable to a terminal. On the basis of the method shown in FIG. 1, as shown in FIG. 5, after the base station reconfigures the handover target cell for the terminal, the method for reconfiguring a cell may further include the following steps 510 and 520.

At step 510, a reconfiguration message for indicating a third neighbor cell sent by the base station is received, where the third neighbor cell is the handover target cell reconfigured by the base station for the terminal.

In the embodiments of the present disclosure, the base station may take a neighbor cell with a greatest signal strength as a best neighbor cell and reconfigure the neighbor cell for the terminal.

At step 520, a handover is initiated to the third neighbor cell based on the reconfiguration message.

It can be seen from the above embodiment that when receiving a reconfiguration message for indicating a third neighbor cell sent by the base station, where the third neighbor cell is the handover target cell reconfigured by the base station for the terminal, a handover is initiated to the third neighbor cell based on the reconfiguration message. In this way, it is ensured that the terminal can eventually perform a handover to a best neighbor cell, and utility of the cell reconfiguration is improved.

FIG. 6 is a flowchart illustrating a method for reconfiguring a cell according to an exemplary embodiment. The method for reconfiguring a cell is applicable to a base station. As shown in FIG. 6, the method for reconfiguring a cell may include the following steps 610 to 630.

At step 610, it is determined that a handover target cell configured for a terminal is a first neighbor cell.

In the embodiments of the present disclosure, the first neighbor cell may be a handover target cell configured by the base station for the terminal in the CHO.

At step 620, when the terminal detects that a cell reconfiguration condition is met, a specified measurement result for reconfiguring the handover target cell sent by the terminal is received. The cell reconfiguration condition is a specified condition for triggering the terminal to request the base station to reconfigure the handover target cell.

In the embodiments of the present disclosure, the cell reconfiguration condition is a specified condition set to change the handover target cell in the CHO, in order to prevent the terminal from performing a handover to a cell with a weaker signal, which in turn may lead to frequent handovers or a handover failure.

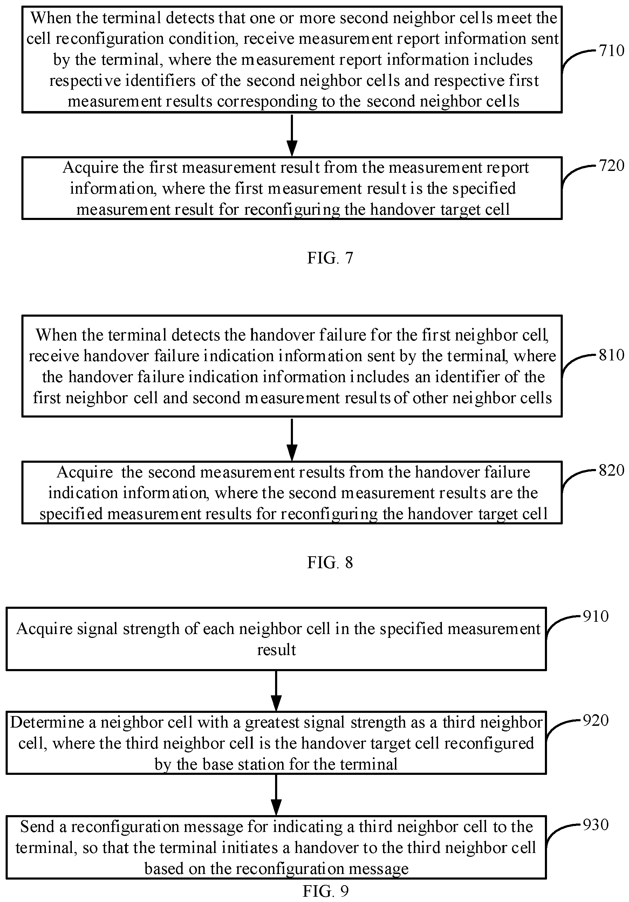

In an embodiment, the cell reconfiguration condition in the step 620 may include a first measurement report condition, where the first measurement report condition is that a neighbor cell after offset is better than the first neighbor cell; its specific implementation can be seen in the embodiment shown in FIG. 7 in detail.

In an embodiment, the first measurement report condition may be a measurement report condition configured by the base station for the terminal and sent to the terminal through first configuration information. The specific implementation includes:
(5-1) determining an identifier and/or a frequency of the first neighbor cell;
(5-2) adding the identifier and/or the frequency of the first neighbor cell to the first configuration information for indicating the first measurement report condition; and
(5-3) sending the first configuration information to the terminal, so that the terminal determines the first measurement report condition based on the first configuration information.

In an embodiment, the first configuration information in the (5-2) may further include a specified offset value configured by the base station for the terminal. For example, the specified offset value is 3db.

In an embodiment, the cell reconfiguration condition in the step 220 may be a handover failure for the first neighbor cell; its specific implementation can be seen in the embodiment shown in FIG. 8 in detail.

At step 630, the handover target cell is reconfigured based on the specified measurement result.

In the embodiments of the present disclosure, when the terminal detects that the cell reconfiguration condition is met, it indicates that the first neighbor cell configured by the base station for the terminal is not the best. In this case, the base station can select a best neighbor cell based on the specified measurement result reported by the terminal and reconfigure the neighbor cell for the terminal.

It can be seen from the above embodiment that when it is determined that the handover target cell configured for the terminal is the first neighbor cell, if the specified measurement result for reconfiguring the handover target cell sent by the terminal is received, the handover target cell can be reconfigured based on the specified measurement result. In this way, it is ensured that the terminal can eventually perform a handover to a best neighbor cell, frequent handovers or a handover failure due to the terminal performing a handover to a cell with a weaker signal can be avoided and the efficiency of cell handover is improved.

FIG. 7 is a flowchart illustrating another method for reconfiguring a cell according to an exemplary embodiment. The method for reconfiguring a cell is applicable to a terminal. On the basis of the method shown in FIG. 6, the cell reconfiguration condition includes a first measurement report condition, where the first measurement report condition is that a neighbor cell after offset is better than the first neighbor cell; in an embodiment, the first measurement report condition is a measurement report condition configured by the base station for the terminal; in an embodiment, the first configuration information further includes a specified offset value configured by the base station for the terminal; as shown in FIG. 7, step 620, when performed, may include the following steps 710 and 720.

At step 710, when the terminal detects that one or more second neighbor cells meet the cell reconfiguration condition, measurement report information sent by the terminal is received. The measurement report information includes respective identifiers of the second neighbor cells and respective first measurement results corresponding to the second neighbor cells.

In the embodiments of the present disclosure, the second neighbor cells represent neighbor cells that meet the first measurement report condition. If the terminal detects that one or more second neighbor cells are better than the first neighbor cell, the terminal can request the base station to reconfigure a handover target cell for it.

At step 720, the first measurement result is acquired from the measurement report information, where the first measurement result is the specified measurement result for reconfiguring the handover target cell.

In the embodiments of the present disclosure, the terminal informs the base station of respective first measurement results corresponding to the second neighbor cells, thus the base station can select a best neighbor cell from the second neighbor cells and reconfigure the neighbor cell for the terminal.

It can be seen from the above embodiment that when the cell reconfiguration condition includes the first measurement report condition, if measurement report information sent by the terminal is received, where the measurement report information includes respective identifiers of the second neighbor cells and respective first measurement results corresponding to the second neighbor cells, it indicates that the signal strength of the second neighbor cells is already greater than the signal strength of the first measurement report condition, that is, it indicates that the first neighbor cell configured by the base station for the terminal is not the best handover target cell, thus the base station is to reconfigure a handover target cell for the terminal from the second neighbor cells. In this case, the base station can acquire the first measurement result from the measurement report information, and the handover target cell is reconfigured based on the first measurement result. In this way, frequent handovers due to the possibility of the terminal performing a handover to a cell with a weaker signal is avoided and the efficiency of cell handover is improved.

FIG. 8 is a flowchart illustrating another method for reconfiguring a cell according to an exemplary embodiment. The method for reconfiguring a cell is applicable to a terminal. On the basis of the method shown in FIG. 6, The cell reconfiguration condition includes a handover failure for the first neighbor cell; as shown in FIG. 8, step 620, when performed, may include the following steps 810 and 820.

At step 810, when the terminal detects the handover failure for the first neighbor cell, handover failure indication information sent by the terminal is received, where the handover failure indication information includes an identifier of the first neighbor cell and second measurement results of other neighbor cells.

In the embodiments of the present disclosure, if the terminal initiates a handover to the first neighbor cell and the handover fails, the terminal may request the base station to reconfigure a handover target cell for it.

At step 820, the second measurement results are acquired from the handover failure indication information, where the second measurement results are the specified measurement results for reconfiguring the handover target cell.

In the embodiments of the present disclosure, the terminal informs the base station of the second measurement results of the other neighbor cells, thus the base station can select a best neighbor cell from the other neighbor cells and reconfigure the neighbor cell for the terminal.

It can be seen from the above embodiment that when the cell reconfiguration condition includes the handover failure for the first neighbor cell, if handover failure indication information sent by the terminal is received, where the handover failure indication information includes an identifier of the first neighbor cell and second measurement results of other neighbor cells, in this case, the second measurement results can be acquired from the handover failure indication information and the handover target cell is reconfigured based on the second measurement results. In this way, when the handover fails, the terminal can initiate a handover to another handover target cell as soon as possible, and the time used for a cell handover is shortened, and the realization of cell reconfiguration is enriched, thus improving the reliability of cell reconfiguration.

FIG. 9 is a flowchart illustrating another method for reconfiguring a cell according to an exemplary embodiment. The method for reconfiguring a cell is applicable to a terminal. On the basis of the method shown in FIG. 6. As shown in FIG. 9, step 630, when performed, may include the following steps 910 to 930.

At step 910, signal strength of each neighbor cell in the specified measurement result is acquired.

At step 920, a neighbor cell with a greatest signal strength is determined as a third neighbor cell, where the third neighbor cell is the handover target cell reconfigured by the base station for the terminal.

In the embodiments of the present disclosure, the base station may take the neighbor cell with the greatest signal strength as a best neighbor cell and reconfigure the neighbor cell for the terminal

At step 930, a reconfiguration message for indicating a third neighbor cell is sent to the terminal, so that the terminal initiates a handover to the third neighbor cell based on the reconfiguration message.

It can be seen from the above embodiment that when the handover target cell is reconfigured based on the specified measurement result, the neighbor cell with the greatest signal strength can be taken as the best neighbor cell, and the neighbor cell is reconfigured for the terminal through the reconfiguration message, so that the terminal can initiate a handover to the neighbor cell with the greatest signal strength, In this way, it is ensured that the terminal can eventually perform a handover to a best neighbor cell, and the utility of the cell reconfiguration is improved.

Corresponding to the embodiments of the above-mentioned methods for reconfiguring a cell embodiments, the present disclosure also provides embodiments of apparatuses for reconfiguring a cell.

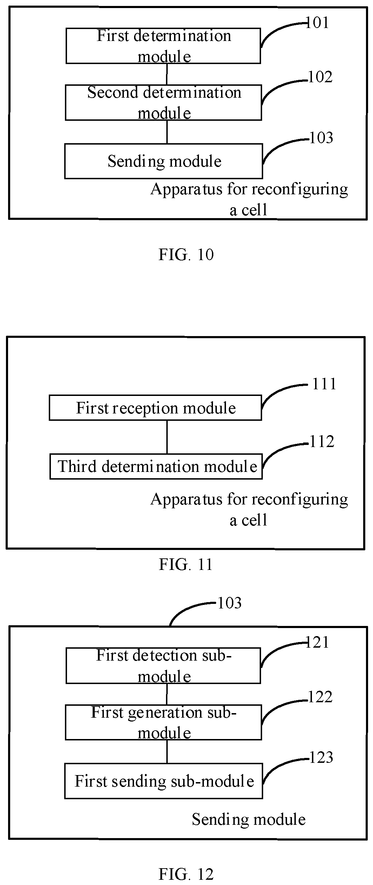

FIG. 10 is a block diagram illustrating an apparatus for reconfiguring a cell according to an exemplary embodiment. The apparatus is applied to a terminal and used to perform the method for reconfiguring a cell shown in FIG. 1, as shown in FIG. 10, the apparatus for reconfiguring a cell may include:
a first determination module 101, configured to determine that a handover target cell configured by a base station for the terminal is a first neighbor cell;
a second determination module 102, configured to determine a cell reconfiguration condition, wherein the cell reconfiguration condition is a specified condition for triggering the terminal to request the base station to reconfigure the handover target cell; and
a sending module 103, configured to, in response to detecting that the cell reconfiguration condition is met, send a specified measurement result for reconfiguring the handover target cell to the base station, so that the base station reconfigures the handover target cell based on the specified measurement result.

It can be seen from the above embodiment that after it is determined that the handover target cell configured by the base station for the terminal is the first neighbor cell, the cell reconfiguration condition can be determined, and when it is detected that the cell reconfiguration condition is met, it indicates that the first neighbor cell configured by the base station for the terminal is not a best handover target cell. In this case, the specified measurement result for reconfiguring the handover target cell may be sent to the base station, thus the base station can reconfigure the handover target cell based on the specified measurement result. In this way, it is ensured that the terminal can eventually perform a handover to the best neighbor cell, frequent handovers or a handover failure due to the terminal performing a handover to a cell with a weaker signal can be avoided and efficiency of cell handover is improved.

In an embodiment, on the basis of the apparatus shown in FIG. 10, the cell reconfiguration condition includes a first measurement report condition, and the first measurement report condition is that a neighbor cell after offset is better than the first neighbor cell.

In an embodiment, on the basis of the above-shown apparatus, the first measurement report condition is a measurement report condition configured by the base station for the terminal; as shown in FIG. 11, the apparatus may further include:
a first reception module 111, configured to receive first configuration information for indicating the first measurement report condition from the base station, wherein the first configuration information includes an identifier and/or a frequency of the first neighbor cell; and
a third determination module 112, configured to determine the first measurement report condition based on the first configuration information.

In an embodiment, on the basis of the apparatus shown in FIG. 11, the first configuration information may further include a specified offset value configured by the base station for the terminal.

In an embodiment, on the basis of the apparatus shown in FIG. 11, as shown in FIG. 12, the sending module 103 may include:
a first detection sub-module 121, configured to detect that one or more second neighbor cells meet the cell reconfiguration condition;
a first generation sub-module 122, configured to generate measurement report information, wherein the measurement report information includes respective identifiers of the one or more second neighbor cells and respective first measurement results corresponding to the one or more second neighbor cells; and
a first sending sub-module 123, configured to send the measurement report information to the base station, so that the base station acquires the first measurement result from the measurement report information, wherein the first measurement result is the specified measurement result.

It can be seen from the above embodiment that when the cell reconfiguration condition includes the first measurement report condition, if it is detected that one or more second neighbor cells meet the cell reconfiguration condition, it indicates that the signal strength of the second neighbor cells is already greater than the signal strength of the first measurement report condition, that is, it indicate that the first neighbor cell configured by the base station for the terminal is not the best handover target cell, thus the base station is to reconfigure a handover target cell for the terminal from the second neighbor cells. In this case, the terminal can trigger the measurement report, that is, the terminal can generate measurement report information. The measurement report information includes respective identifiers of the second neighbor cells and respective first measurement results corresponding to the second neighbor cells. The measurement report information is sent to the base station, so that the base station can acquire the first measurement result from the measurement report information, and the handover target cell is reconfigured based on the first measurement result. In this way, frequent handovers due to the possibility of the terminal performing a handover to a cell with a weaker signal is avoided and the efficiency of cell handover is improved.

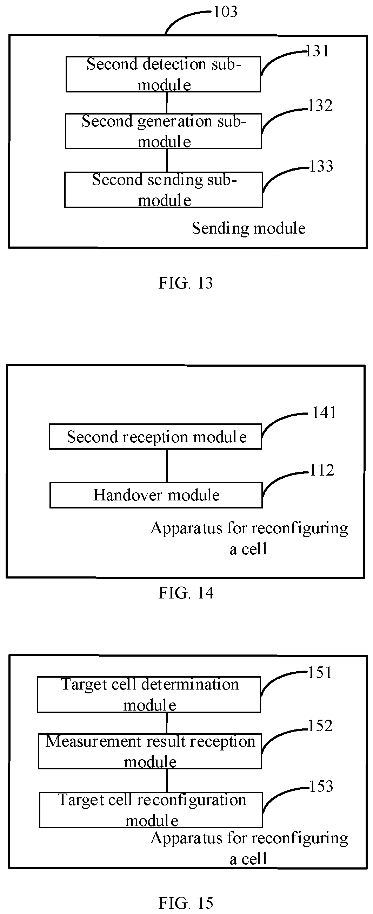

In an embodiment, on the basis of the apparatus shown in FIG. 10, as shown in FIG. 13, the cell reconfiguration condition includes a handover failure for the first neighbor cell; the sending module 103 includes:
a second detection sub-module 131, configured to detect the handover failure for the first neighbor cell;
a second generation sub-module 132, configured to generate handover failure indication information, wherein the handover failure indication information includes an identifier of the first neighbor cell and second measurement results of other neighbor cells; and
a second sending sub-module 133, configured to send the handover failure indication information to the base station, so that the base station acquires the second measurement results from the handover failure indication information, wherein the second measurement results are the specified measurement result.

It can be seen from the above embodiment that when the cell reconfiguration condition includes the handover failure for the first neighbor cell, if the handover failure for the first neighbor cell is detected, the terminal can request the base station to reconfigure a handover target cell for it, that is, handover failure indication information is generated. The handover failure indication information includes an identifier of the first neighbor cell and second measurement results of other neighbor cells. The handover failure indication information is sent to the base station, so that the base station acquires the second measurement results from the handover failure indication information and reconfigures the handover target cell based on the second measurement results. In this way, when the handover fails, the terminal can initiate a handover to another handover target cell as soon as possible, and a time used for a cell handover is shortened, and realization of cell reconfiguration is enriched, thus improving reliability of cell reconfiguration.

In an embodiment, on the basis of the apparatus shown in FIG. 10, as shown in FIG. 14, the apparatus may further include:
a second reception module 141, configured to receive a reconfiguration message for indicating a third neighbor cell sent by the base station, wherein the third neighbor cell is the handover target cell reconfigured by the base station for the terminal; and
a handover module 142, configured to initiate a handover to the third neighbor cell based on the reconfiguration message.

It can be seen from the above embodiment that when receiving a reconfiguration message for indicating a third neighbor cell sent by the base station, where the third neighbor cell is the handover target cell reconfigured by the base station for the terminal, a handover is initiated to the third neighbor cell based on the reconfiguration message. In this way, it is ensured that the terminal can eventually perform a handover to a best neighbor cell, and utility of the cell reconfiguration is improved.

FIG. 15 is a block diagram illustrating an apparatus for reconfiguring a cell according to an exemplary embodiment. The apparatus is applied to a base station and used to perform the method for reconfiguring a cell shown in FIG. 6, as shown in FIG. 15, the apparatus for reconfiguring a cell may include:
a target cell determination module 151, configured to determine that a handover target cell configured for a terminal is a first neighbor cell;
a measurement result reception module 152, configured to, in response to that the terminal detects that a cell reconfiguration condition is met, receive a specified measurement result for reconfiguring the handover target cell sent by the terminal, wherein the cell reconfiguration condition is a specified condition for triggering the terminal to request the base station to reconfigure the handover target cell; and
a target cell reconfiguration module 153, configured to reconfigure the handover target cell based on the specified measurement result.

It can be seen from the above embodiment that when it is determined that the handover target cell configured for the terminal is the first neighbor cell, if the specified measurement result for reconfiguring the handover target cell sent by the terminal is received, the handover target cell can be reconfigured based on the specified measurement result. In this way, it is ensured that the terminal can eventually perform a handover to a best neighbor cell, frequent handovers or a handover failure due to the terminal performing a handover to a cell with a weaker signal can be avoided and the efficiency of cell handover is improved.

In an embodiment, on the basis of the apparatus shown in FIG. 15, the cell reconfiguration condition includes a first measurement report condition, and the first measurement report condition is that a neighbor cell after offset is better than the first neighbor cell.

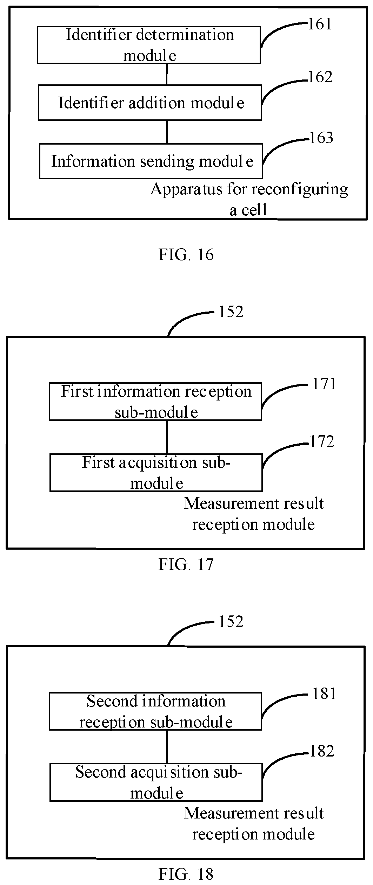

In an embodiment, on the basis of the above-shown apparatus, as shown in FIG. 16, the apparatus may further include:
an identifier determination module 161, configured to determine an identifier and/or a frequency of the first neighbor cell;
an identifier addition module 162, configured to add the identifier and/or the frequency of the first neighbor cell to first configuration information for indicating the first measurement report condition; and
an information sending module 163, configured to send the first configuration information to the terminal, so that the terminal determines the first measurement report condition based on the first configuration information.

In an embodiment, on the basis of the apparatus shown in FIG. 16, the first configuration information further includes a specified offset value configured by the base station for the terminal.

In an embodiment, on the basis of the apparatus shown in FIG. 16, as shown in FIG. 17, the measurement result reception module 152 may include:
a first information reception sub-module 171, configured to, in response to that the terminal detects that one or more second neighbor cells meet the cell reconfiguration condition, receive measurement report information sent by the terminal, wherein the measurement report information includes respective identifiers of the one or more second neighbor cells and respective first measurement results corresponding to the one or more second neighbor cells; and
a first acquisition sub-module 172, configured to acquire the first measurement result from the measurement report information, wherein the first measurement result is the specified measurement result.

It can be seen from the above embodiment that when the cell reconfiguration condition includes the first measurement report condition, if measurement report information sent by the terminal is received, where the measurement report information includes respective identifiers of the second neighbor cells and respective first measurement results corresponding to the second neighbor cells, it indicates that the signal strength of the second neighbor cells is already greater than the signal strength of the first measurement report condition, that is, it indicates that the first neighbor cell configured by the base station for the terminal is not the best handover target cell, thus the base station is to reconfigure a handover target cell for the terminal from the second neighbor cells. In this case, the base station can acquire the first measurement result from the measurement report information, and the handover target cell is reconfigured based on the first measurement result. In this way, frequent handovers due to the possibility of the terminal performing a handover to a cell with a weaker signal is avoided and the efficiency of cell handover is improved.

In an embodiment, on the basis of the apparatus shown in FIG. 15, the cell reconfiguration condition includes a handover failure for the first neighbor cell; as shown in FIG. 18, the measurement result reception module 152 may include:
a second information reception sub-module 181, configured to, in response to that the terminal detects the handover failure for the first neighbor cell, receive handover failure indication information sent by the terminal, wherein the handover failure indication information includes an identifier of the first neighbor cell and second measurement results of other neighbor cells; and
a second acquisition sub-module 182, configured to acquire the second measurement results from the handover failure indication information, wherein the second measurement results are the specified measurement result.

It can be seen from the above embodiment that when the cell reconfiguration condition includes the handover failure for the first neighbor cell, if handover failure indication information sent by the terminal is received, where the handover failure indication information includes an identifier of the first neighbor cell and second measurement results of other neighbor cells, in this case, the second measurement results can be acquired from the handover failure indication information and the handover target cell is reconfigured based on the second measurement results. In this way, when the handover fails, the terminal can initiate a handover to another handover target cell as soon as possible, and the time used for a cell handover is shortened, and the realization of cell reconfiguration is enriched, thus improving the reliability of cell reconfiguration.

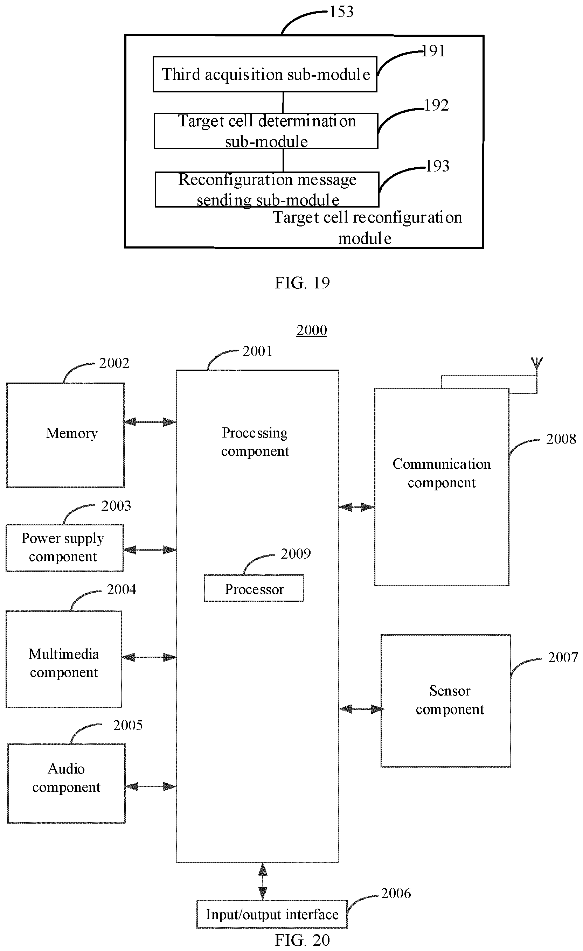

In an embodiment, on the basis of the apparatus shown in FIG. 15, as shown in FIG. 19, the target cell reconfiguration module 153 may include:
a third acquisition sub-module 191, configured to acquire signal strength of each neighbor cell in the specified measurement result;
a target cell determination sub-module 192, configured to determine a neighbor cell with a greatest signal strength as a third neighbor cell, wherein the third neighbor cell is the handover target cell reconfigured by the base station for the terminal; and
a reconfiguration message sending sub-module 193, configured to send a reconfiguration message for indicating the third neighbor cell to the terminal, so that the terminal initiates a handover to the third neighbor cell based on the reconfiguration message.

It can be seen from the above embodiment that when the handover target cell is reconfigured based on the specified measurement result, the neighbor cell with the greatest signal strength can be taken as the best neighbor cell, and the neighbor cell is reconfigured for the terminal through the reconfiguration message, so that the terminal can initiate a handover to the neighbor cell with the greatest signal strength, In this way, it is ensured that the terminal can eventually perform a handover to a best neighbor cell, and the utility of the cell reconfiguration is improved.

For the apparatus embodiment, since the apparatus substantially corresponds to the method embodiment, reference may be made to some description of the method embodiment. The apparatus embodiments described above are merely schematic, in which the units described as separate components may or may not be physically separated, and the components displayed as units may or may not be physical units, may be located in one place, or may be distributed to a plurality of network units. Some or all of the modules may be selected according to actual needs to achieve the solution of the present disclosure, which a person of ordinary skill in the art would understand and implement without creative efforts.

The present disclosure further provides a non-transitory computer readable storage medium with computer instructions stored thereon, where the computer instructions are used to perform the method for reconfiguring a cell shown in any one of FIG. 1 to FIG. 5.

The present disclosure further provides a non-transitory computer readable storage medium with computer instructions stored thereon, where the computer instructions are used to perform the method for reconfiguring a cell shown in any one of FIG. 5 to FIG. 9.

The present disclosure further provides an apparatus for reconfiguring a cell, the apparatus is applied to a terminal and includes:
a processor; and a memory for storing instructions executable by the processor,
where the processor is configured to:
   determine that a handover target cell configured by a base station for the terminal is a first neighbor cell;
   determine a cell reconfiguration condition, wherein the cell reconfiguration condition is a specified condition for triggering the terminal to request the base station to reconfigure the handover target cell; and
   in response to detecting that the cell reconfiguration condition is met, send a specified measurement result for reconfiguring the handover target cell to the base station, so that the base station reconfigures the handover target cell based on the specified measurement result.

FIG. 20 is a schematic structural diagram illustrating a network detach apparatus according to an embodiment. As shown in FIG. 20, a network detach apparatus 2000 is shown according to an embodiment. The apparatus 2000 may be a terminal such as a computer, a mobile phone, a digital broadcast terminal, a message transceiving device, a game console, a tablet device, medical equipment, fitness equipment and a personal digital assistant.

As shown in FIG. 20, the apparatus 2000 may include one or more of the following components: a processing component 2001, a memory 2002, a power supply component 2003, a multimedia component 2004, an audio component 2005, an input/output (I/O) interface 2006, a sensor component 2007 and a communication component 2008.

The processing component 2001 generally controls overall operations of the apparatus 2000, such as operations associated with display, phone calls, data communications, camera operations, and recording operations. The processing component 2001 may include one or more processors 2009 to execute instructions so as to complete all or part of the steps of the above methods. In addition, the processing component 2001 may include one or more modules to facilitate the interaction between the processing component 2001 and other components. For example, the processing component 2001 may include a multimedia module to facilitate the interaction between the multimedia component 2004 and the processing component 2001.

The memory 2002 is configured to store various types of data to support the operation of the apparatus 2000. Examples of such data include instructions for any application or method operated on the apparatus 2000, contact data, phonebook data, messages, pictures, videos, and so on. The memory 2002 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or compact disk.

The power supply component 2003 supplies power for different components of the apparatus 2000. The power supply component 2003 may include a power supply management system, one or more power supplies, and other components associated with generating, managing and distributing power for the apparatus 2000.

The multimedia component 2004 includes a screen providing an output interface between the apparatus 2000 and a user. In some examples, the screen may include a Liquid Crystal Display (LCD) and a Touch Panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a duration and a pressure associated with the touch or swipe. In some examples, the multimedia component 2004 may include a front camera and/or a rear camera. The front camera and/or rear camera may receive external multimedia data when the apparatus 2000 is in an operating mode, such as a photographing mode or a video mode. Each of the front camera and the rear camera may be a fixed optical lens system or have focal length and optical zooming capability.

The audio component 2005 is to output and/or input an audio signal. For example, the audio component 2005 includes a microphone (MIC). When the apparatus 2000 is in an operating mode, such as a call mode, a record mode and a voice recognition mode, the microphone is to receive an external audio signal. The received audio signal may be further stored in the memory 2002 or sent via the communication component 2008. In some examples, the audio component 2005 further includes a speaker for outputting an audio signal.

The I/O interface 2006 provides an interface between the processing component 2001 and a peripheral interface module. The peripheral interface module may be a keyboard, a click wheel, buttons, or the like. These buttons may include but not limited to, a home button, a volume button, a start button and a lock button.

The sensor component 2007 includes one or more sensors to provide status assessments of various aspects for the apparatus 2000. For example, the sensor component 2007 may detect the on/off status of the apparatus 2000, and relative positioning of the component, for example, the component is a display and a keypad of the apparatus 2000. The sensor component 2007 may also detect a change in position of the apparatus 2000 or a component of the apparatus 2000, a presence or absence of the contact between a user and the apparatus 2000, an orientation or an acceleration/deceleration of the apparatus 2000, and a change in temperature of the apparatus 2000. The sensor component 2007 may include a proximity sensor to detect the presence of a nearby object without any physical contact. The sensor component 2007 may further include an optical sensor, such as a Complementary Metal-Oxide-Semiconductor (CMOS) or Charged Coupled Device (CCD) image sensor which is used in imaging applications. In some examples, the sensor component 2007 may further include an acceleration sensor, a gyroscope sensor, a magnetic sensor, a pressure sensor, or a temperature sensor.

The communication component 2008 is to facilitate wired or wireless communication between the apparatus 2000 and other devices. The apparatus 2000 may access a wireless network based on a communication standard, such as Wi-Fi, 2G, 3G, or a combination thereof. In an example, the communication component 2008 receives a broadcast signal or broadcast related information from an external broadcast management system via a broadcast channel. In an example, the communication component 2008 may further include a Near Field Communication (NFC) module for promoting short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an example, the apparatus 2000 may be implemented by one or more Application Specific Integrated Circuits (ASICs), Digital Signal Processors (DSPs), Digital Signal Processing Devices (DSPDs), programmable Logic Devices (PLDs), Field Programmable Gate Arrays (FPGAs), controllers, microcontrollers, microprocessors, or other electronic components for performing the above method.

In an example, there is further provided a non-transitory computer readable storage medium including instructions, such as the memory 2002 including instructions. The above instructions may be executed by the processor 2009 of the apparatus 2000 to complete the above method. For example, the non-transitory computer readable storage medium may be a Read-Only Memory (ROM), a Random Access Memory (RAM), a CD-ROM, a magnetic tape, a floppy disk, an optical data storage device, and the like.

When the instructions in the storage medium are executed by the processor, the apparatus is caused to perform any one of the above methods for reconfiguring a cell.

The present disclosure further provides an apparatus for reconfiguring a cell, the apparatus is applied to a base station and includes:
a processor; and a memory for storing instructions executable by the processor,
where the processor is configured to:
   determine that a handover target cell configured for a terminal is a first neighbor cell;
   in response to that the terminal detects that a cell reconfiguration condition is met, receive a specified measurement result for reconfiguring the handover target cell sent by the terminal, wherein the cell reconfiguration condition is a specified condition for triggering the terminal to request the base station to reconfigure the handover target cell; and
   reconfigure the handover target cell based on the specified measurement result.

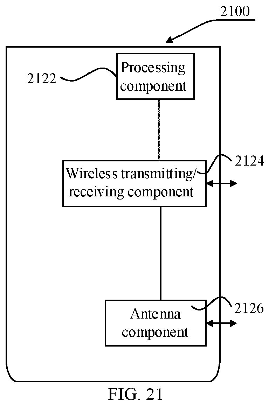

As shown in FIG. 21, FIG. 21 is a schematic structural diagram illustrating a network detach apparatus according to an embodiment. The apparatus 2100 may be provided as a target base station. Referring to FIG. 21, the apparatus 2100 includes a processing component 2122, a wireless transmitting/receiving component 2124, an antenna component 2126 and a signal processing portion specific to a wireless interface. The processing component 2122 may further include one or more processors.

A processor in the processing component 2122 may be configured to perform any one of the above methods for reconfiguring a cell.

Those skilled in the art will easily think of other embodiments of the present disclosure after considering the specification and practicing the disclosure disclosed herein. This application is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The description and the embodiments are to be regarded as exemplary only, and the true scope and spirit of the present disclosure are pointed out by the following claims.

It should be understood that the present disclosure is not limited to the precise structure that has been described above and shown in the drawings, and various modifications and changes can be made without departing from its scope. The scope of the present disclosure is only limited by the appended claims.

## Claims

1. A method for reconfiguring a cell, being applied to a terminal and comprising:
determining a handover target cell configured by a base station for the terminal is a first neighbor cell;
determining a cell reconfiguration condition, wherein the cell reconfiguration condition is a specified condition for triggering the terminal to request the base station to reconfigure the handover target cell; and
sending a specified measurement result for reconfiguring the handover target cell to the base station in response to detecting that the cell reconfiguration condition is met, so that the base station reconfigures the handover target cell based on the specified measurement result.

2. The method of claim 1, wherein the cell reconfiguration condition comprises a first measurement report condition, and the first measurement report condition is that a neighbor cell after offset is better than the first neighbor cell.

3. The method of claim 2, wherein the first measurement report condition is a measurement report condition configured by the base station for the terminal;
the method further comprises:
receiving first configuration information for indicating the first measurement report condition from the base station, wherein the first configuration information comprises at least one of an identifier of the first neighbor cell or a frequency of the first neighbor cell; and
determining the first measurement report condition based on the first configuration information.

4. The method of claim 3, wherein the first configuration information further comprises a specified offset value configured by the base station for the terminal.

5. The method of any one of claims 2 to 4, wherein sending the specified measurement result for reconfiguring the handover target cell to the base station in response to detecting that the cell reconfiguration condition is met, comprises:
detecting that one or more second neighbor cells meet the cell reconfiguration condition;
generating measurement report information, wherein the measurement report information comprises respective identifiers of the one or more second neighbor cells and respective first measurement results corresponding to the one or more second neighbor cells; and
sending the measurement report information to the base station, so that the base station acquires the first measurement result from the measurement report information, wherein the first measurement result is the specified measurement result.

6. The method of claim 1, wherein the cell reconfiguration condition comprises a handover failure for the first neighbor cell;
sending the specified measurement result for reconfiguring the handover target cell to the base station in response to detecting that the cell reconfiguration condition is met, comprises:
detecting the handover failure for the first neighbor cell;
generating handover failure indication information, wherein the handover failure indication information comprises an identifier of the first neighbor cell and second measurement results of other neighbor cells; and
sending the handover failure indication information to the base station, so that the base station acquires the second measurement results from the handover failure indication information, wherein the second measurement results are the specified measurement result.

7. The method of claim 1, further comprising:
receiving a reconfiguration message for indicating a third neighbor cell from the base station, wherein the third neighbor cell is the handover target cell reconfigured by the base station for the terminal; and
initiating a handover to the third neighbor cell based on the reconfiguration message.

8. A method for reconfiguring a cell, being applied to a base station and comprising:
determining a handover target cell configured for a terminal is a first neighbor cell;
receiving a specified measurement result for reconfiguring the handover target cell from the terminal in response to that the terminal detects that a cell reconfiguration condition is met, wherein the cell reconfiguration condition is a specified condition for triggering the terminal to request the base station to reconfigure the handover target cell; and
reconfiguring the handover target cell based on the specified measurement result.

9. The method of claim 8, wherein the cell reconfiguration condition comprises a first measurement report condition, and the first measurement report condition is that a neighbor cell after offset is better than the first neighbor cell.

10. The method of claim 9, further comprising:
determining at least one of an identifier of the first neighbor cell or a frequency of the first neighbor cell;
adding at least one of the identifier of the first neighbor cell or the frequency of the first neighbor cell to first configuration information for indicating the first measurement report condition; and
sending the first configuration information to the terminal, so that the terminal determines the first measurement report condition based on the first configuration information.

11. The method of claim 10, wherein the first configuration information further comprises a specified offset value configured by the base station for the terminal.

12. The method of any one of claims 9 to 11, wherein receiving the specified measurement result for reconfiguring the handover target cell from the terminal in response to that the terminal detects that the cell reconfiguration condition is met, comprises:
receiving measurement report information from the terminal in response to that the terminal detects that one or more second neighbor cells meet the cell reconfiguration condition, wherein the measurement report information comprises respective identifiers of the one or more second neighbor cells and respective first measurement results corresponding to the one or more second neighbor cells; and
acquiring the first measurement result from the measurement report information, wherein the first measurement result is the specified measurement result.

13. The method of claim 8, wherein the cell reconfiguration condition comprises a handover failure for the first neighbor cell;
receiving the specified measurement result for reconfiguring the handover target cell from the terminal in response to that the terminal detects that the cell reconfiguration condition is met, comprises:
receiving handover failure indication information from the terminal in response to that the terminal detects the handover failure for the first neighbor cell, wherein the handover failure indication information comprises an identifier of the first neighbor cell and second measurement results of other neighbor cells; and
acquiring the second measurement results from the handover failure indication information, wherein the second measurement results are the specified measurement result.

14. The method of claim 8, wherein reconfiguring the handover target cell based on the specified measurement result comprises:
acquiring signal strength of each neighbor cell in the specified measurement result;
determining a neighbor cell with a greatest signal strength as a third neighbor cell, wherein the third neighbor cell is the handover target cell reconfigured by the base station for the terminal; and
sending a reconfiguration message for indicating the third neighbor cell to the terminal, so that the terminal initiates a handover to the third neighbor cell based on the reconfiguration message.

15. An apparatus for reconfiguring a cell, being applied to a terminal and comprising:
a first determination module, configured to determine a handover target cell configured by a base station for the terminal is a first neighbor cell;
a second determination module, configured to determine a cell reconfiguration condition, wherein the cell reconfiguration condition is a specified condition for triggering the terminal to request the base station to reconfigure the handover target cell; and
a sending module, configured to send a specified measurement result for reconfiguring the handover target cell to the base station in response to detecting that the cell reconfiguration condition is met, so that the base station reconfigures the handover target cell based on the specified measurement result.

16. The apparatus of claim 15, wherein the cell reconfiguration condition comprises a first measurement report condition, and the first measurement report condition is that a neighbor cell after offset is better than the first neighbor cell.

17. The apparatus of claim 16, wherein the first measurement report condition is a measurement report condition configured by the base station for the terminal;
the apparatus further comprises:
a first reception module, configured to receive first configuration information for indicating the first measurement report condition from the base station, wherein the first configuration information comprises at least one of an identifier of the first neighbor cell or a frequency of the first neighbor cell; and
a third determination module, configured to determine the first measurement report condition based on the first configuration information.

18. The apparatus of claim 17, wherein the first configuration information further comprises a specified offset value configured by the base station for the terminal.

19. The apparatus of any one of claims 16 to 18, wherein the sending module comprises:
a first detection sub-module, configured to detect that one or more second neighbor cells meet the cell reconfiguration condition;
a first generation sub-module, configured to generate measurement report information, wherein the measurement report information comprises respective identifiers of the one or more second neighbor cells and respective first measurement results corresponding to the one or more second neighbor cells; and
a first sending sub-module, configured to send the measurement report information to the base station, so that the base station acquires the first measurement result from the measurement report information, wherein the first measurement result is the specified measurement result.

20. The apparatus of claim 15, wherein the cell reconfiguration condition comprises a handover failure for the first neighbor cell;
the sending module comprises:
a second detection sub-module, configured to detect the handover failure for the first neighbor cell;
a second generation sub-module, configured to generate handover failure indication information, wherein the handover failure indication information comprises an identifier of the first neighbor cell and second measurement results of other neighbor cells; and
a second sending sub-module, configured to send the handover failure indication information to the base station, so that the base station acquires the second measurement results from the handover failure indication information, wherein the second measurement results are the specified measurement result.

21. The apparatus of claim 15, further comprising:
a second reception module, configured to receive a reconfiguration message for indicating a third neighbor cell from the base station, wherein the third neighbor cell is the handover target cell reconfigured by the base station for the terminal; and
a handover module, configured to initiate a handover to the third neighbor cell based on the reconfiguration message.

22. An apparatus for reconfiguring a cell, being applied to a base station and comprising:
a target cell determination module, configured to determine that a handover target cell configured for a terminal is a first neighbor cell;
a measurement result reception module, configured to receive a specified measurement result for reconfiguring the handover target cell from the terminal in response to that the terminal detects that a cell reconfiguration condition is met, wherein the cell reconfiguration condition is a specified condition for triggering the terminal to request the base station to reconfigure the handover target cell; and
a target cell reconfiguration module, configured to reconfigure the handover target cell based on the specified measurement result.

23. The apparatus of claim 22, wherein the cell reconfiguration condition comprises a first measurement report condition, and the first measurement report condition is that a neighbor cell after offset is better than the first neighbor cell.

24. The apparatus of claim 23, further comprising:
an identifier determination module, configured to determine at least one of an identifier of the first neighbor cell or a frequency of the first neighbor cell;
an identifier addition module, configured to add at least one of the identifier of the first neighbor cell or the frequency of the first neighbor cell to first configuration information for indicating the first measurement report condition; and
an information sending module, configured to send the first configuration information to the terminal, so that the terminal determines the first measurement report condition based on the first configuration information.

25. The apparatus of claim 24, wherein the first configuration information further comprises a specified offset value configured by the base station for the terminal.

26. The apparatus of any one of claims 23 to 25, wherein the measurement result reception module comprises:
a first information reception sub-module, configured to receive measurement report information from the terminal in response to that the terminal detects that one or more second neighbor cells meet the cell reconfiguration condition wherein the measurement report information comprises respective identifiers of the one or more second neighbor cells and respective first measurement results corresponding to the one or more second neighbor cells; and
a first acquisition sub-module, configured to acquire the first measurement result from the measurement report information, wherein the first measurement result is the specified measurement result.

27. The apparatus of claim 22, wherein the cell reconfiguration condition comprises a handover failure for the first neighbor cell;
the measurement result reception module comprises:
a second information reception sub-module, configured to receive handover failure indication information from the terminal in response to that the terminal detects the handover failure for the first neighbor cell, wherein the handover failure indication information comprises an identifier of the first neighbor cell and second measurement results of other neighbor cells; and
a second acquisition sub-module, configured to acquire the second measurement results from the handover failure indication information, wherein the second measurement results are the specified measurement result.

28. The apparatus of claim 22, wherein the target cell reconfiguration module comprises:
a third acquisition sub-module, configured to acquire signal strength of each neighbor cell in the specified measurement result;
a target cell determination sub-module, configured to determine a neighbor cell with a greatest signal strength as a third neighbor cell, wherein the third neighbor cell is the handover target cell reconfigured by the base station for the terminal; and
a reconfiguration message sending sub-module, configured to send a reconfiguration message for indicating the third neighbor cell to the terminal, so that the terminal initiates a handover to the third neighbor cell based on the reconfiguration message.

29. A non-transitory computer readable storage medium with computer instructions stored thereon, wherein the computer instructions are used to perform the method for reconfiguring a cell as claimed in any one of claims 1-7.

30. A non-transitory computer readable storage medium with computer instructions stored thereon, wherein the computer instructions are used to perform the method for reconfiguring a cell as claimed in any one of claims 8-14.

31. An apparatus for reconfiguring a cell applied to a terminal, comprising:
a processor; and
a memory for storing instructions executable by the processor,
wherein the processor is configured to:
determine a handover target cell configured by a base station for the terminal is a first neighbor cell;
determine a cell reconfiguration condition, wherein the cell reconfiguration condition is a specified condition for triggering the terminal to request the base station to reconfigure the handover target cell; and
send a specified measurement result for reconfiguring the handover target cell to the base station in response to detecting that the cell reconfiguration condition is met, so that the base station reconfigures the handover target cell based on the specified measurement result.

32. An apparatus for reconfiguring a cell applied to a base station, comprising:
a processor; and
a memory for storing instructions executable by the processor,
wherein the processor is configured to:
determine that a handover target cell configured for a terminal is a first neighbor cell;
receive a specified measurement result for reconfiguring the handover target cell from the terminal in response to that the terminal detects that a cell reconfiguration condition is met, wherein the cell reconfiguration condition is a specified condition for triggering the terminal to request the base station to reconfigure the handover target cell; and reconfigure the handover target cell based on the specified measurement result.
